(19) Europäisches Patentamt
European Patent Office
Office européen des brevets

(11) Veröffentlichungsnummer: **0 114 784**
**B1**

# (12) EUROPÄISCHE PATENTSCHRIFT

(45) Veröffentlichungstag der Patentschrift: **01.06.88**

(51) Int. Cl.⁴: **B 05 D 3/06**, C 09 D 5/00

(21) Anmeldenummer: **84810025.1**

(22) Anmeldetag: **16.01.84**

(54) **Verfahren zur Elektronenstrahl-Härtung von Überzugsmassen.**

(30) Priorität: **20.01.83 CH 319/83**

(43) Veröffentlichungstag der Anmeldung: **01.08.84 Patentblatt 84/31**

(45) Bekanntmachung des Hinweises auf die Patenterteilung: **01.06.88 Patentblatt 88/22**

(84) Benannte Vertragsstaaten: **BE CH DE FR GB IT LI NL SE**

(56) Entgegenhaltungen:
**DE - A - 2 221 845**
**US - A - 4 393 094**

(73) Patentinhaber: **CIBA-GEIGY AG, Klybeckstrasse 141, CH-4002 Basel (CH)**

(72) Erfinder: **Berner, Godwin, Dr., Waldhofstrasse 70, CH-4310 Rheinfelden (CH)**

**EP 0 114 784 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Härten von ethylenisch ungesättigten Überzugsmassen durch Elektronenstrahl-Bestrahlung unter Zusatz von sterisch gehinderten Aminen als Härtungsbeschleuniger sowie die so härtbaren Überzugsmassen.

Die Härtung von Lacken, Druckfarben, graphischen Produkten, gedruckten Schaltungen und anderen Überzugsmassen durch Elektronenstrahlhärtung gewinnt zunehmend an Bedeutung in der industriellen Produktion, wo eine grosse Stückzahl in kurzer Zeit gehärtet werden soll. Wenn es gelingt, die an sich schon sehr kurzen Härtungszeiten der Elektronen-Strahlhärtung noch weiter zu verkürzen, so kann man trotz der hohen Kosten der Bestrahlungsanlagen die Rationalität dieses Härtungsverfahrens wesentlich erhöhen und mit einer niedrigeren Strahlungsdosis arbeiten.

Bisher sind noch keine Beschleuniger für die Elektronenstrahl-Härtung bekanntgeworden. Es wurde nunmehr gefunden, dass sich die Härtung von ethylenisch ungesättigten Überzugsmassen durch Zusatz von sterisch gehinderten Aminen wesentlich beschleunigen lässt. Im Unterschied zu anderen Aminen tritt dabei keine merkliche Vergilbung der Überzugsmassen und keine vorzeitige Gelierung beim Lagern ein. Ein weiterer Vorteil ist die bekannte Tatsache, dass die sterisch gehinderten Amine allgemein eine lichtstabilisierende Wirkung besitzen. Diese Verbindungen fungieren also nach der Härtung als Lichtschutzmittel für die Überzugsmassen.

Gegenstand der Erfindung ist daher ein Verfahren zum Härten von Überzugsmassen, welche ethylenisch ungesättigte Verbindungen enthalten, durch Bestrahlung mit Elektronenstrahlen unter Zusatz eines Härtungsbeschleunigers, dadurch gekennzeichnet, dass man als Härtungsbeschleuniger ein 2,2,6,6-Tetraalkylpiperidinderivat verwendet, das in seinem Molekül mindestens eine Gruppe der Formel I enthält,

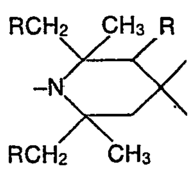

(I),

worin R Wasserstoff oder Methyl ist.

Die Überzugsmasse kann aus einer einzelnen strahlenhärtbaren Verbindung bestehen, wie beispielsweise einem Acryl- oder Methacrylsäureester eines Polyols. Vorzugsweise verwendet man jedoch Gemische aus mindestens einer niedermolekularen und einer höhermolekularen strahlenhärtbaren Verbindung. Beispiele für niedermolekulare Verbindungen sind (Meth)acrylate von Mono-, Di-, Tri- oder Tetraolen wie z.B. Methyl-, Ethyl-, Butyl-, 2-Ethylhexyl-, 2-Hydroxyethyl- oder 2-Hydroxypropylacrylat, Isobornylacrylat, Methyl-, Ethyl- oder Isopropylmethacrylat, Dicyclopentadienyl-(meth)acrylat, Dicyclopentadienyloxyethyl-(meth)acrylat, Ethylenglykol-, Propylenglykol-, Hexamethylenglykol-di(meth)acrylat, Bisphenol-A-diacrylat, Trimethylol-propan-triacrylat, Tris-(2-acryloxyethyl)-isocyanurat, Pentaerythrit-triacrylat oder -tetra(meth)acrylat. Weitere niedermolekulare Monomere sind Acrylnitril, Acrylamid, Methacrylamid, N-substituierte (Meth)acrylamide, Vinylacetat, Vinylacrylat, Vinyl-alkyl-ether, N-Vinylpyrrolidon, Vinylchlorid, Vinylidenchlorid, Styrol, Alkyl- oder Halogenstyrole, Divinylbenzol, Divinylsuccinat, Diallylphthalat, Triallylisocyanurat oder Triallylphosphat.

Beispiele für höhermolekulare (oligomere) strahlenhärtbare Verbindungen sind acrylierte oder methacrylierte Epoxidharze, Polyurethane, Polyether oder Polyester, ungesättigte Polyesterharze, Oligomere von Alkyl(meth)acrylaten oder entsprechende Co-oligomere. Solche Oligomere werden auch Prepolymere genannt. Ihr Molekulargewicht kann etwa 400 bis 4000 betragen, die Anzahl der Doppelbindungen pro Molekül kann 1 bis etwa 20 betragen.

Durch entsprechende Mischung von niedermolekularen mit höhermolekularen Komponenten kann man die Viskosität der Gemische sowie die Eigenschaften der gehärteten Überzüge variieren. Im allgemeinen sind die Gemische lösungsmittelfrei, in bestimmten Fällen kann aber der Zusatz einer kleinen Menge Lösungsmittel für die Einstellung der richtigen Viskosität notwendig sein. Zur Erhöhung der Viskosität können auch begrenzte Menge eines Polymeren im Gemisch gelöst werden.

Die Überzugsmasse kann auch ein Gemisch von ethylenisch ungesättigten, strahlenhärtbaren Bindemitteln und thermisch oder katalytisch-thermisch härtbaren Bindemitteln sein. Ein solches Hybrid-System kann zweistufig gehärtet werden, beispielsweise kann eine Vorhärtung durch Elektronenbestrahlung und eine Nachhärtung durch Wärmezufuhr geschehen, was für bestimmte Anwendungszwecke Vorteile bieten kann. Als Katalysatoren für die thermische Härtung können hierbei vorzugsweise maskierte (verkappte) Säurehärter verwendet werden, die bei normaler Lagerung wirkungslos sind und erst durch die Wärmezufuhr in ihre aktive Form übergeführt werden.

Die Überzüge können transparent sein oder pigmentiert, sie können ferner übliche Additive enthalten wie z.B. Verlaufshilfsmittel, Thixotropiemittel oder Netzmittel. Für besondere Anwendungen können die Überzugsmassen auch mit Füll- oder Verstärkerstoffen vermischt sein. Beispiele für Füllstoffe sind Kaolin, Talk, Gips oder silikatische Füllstoffe. Beispiele für Verstärkerstoffe sind insbesondere Fasern wie z.B. Glasfasern, Metallfasern oder Kohlefasern.

Weitere Additive können Stabilisatoren sein, wie z.B. Antioxidantien Metalldesaktivatoren oder Lichtschutzmittel. Von besonderer Bedeutung ist der Zusatz von Lichtschutzmitteln vom Typ der UV-Absorber und von organischen Verbindungen des dreiwertigen Phosphors, wie z.B. von Phosphiten, Phosphoniten oder Phosphinen.

Die erfindungsgemäss verwendeten Härtungsbeschleuniger sind als Lichtschutzmittel bekannte Verbindungen. Es handelt sich dabei um Verbindungen, die in ihrem Molekül mindestens eine Gruppe der Formel I enthalten

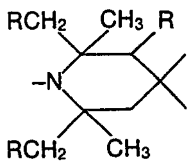
(I) ,

worin R Wasserstoff oder Methyl bedeutet. Die Härtungsbeschleuniger können eine oder mehrere solcher Gruppen der Formel I enthalten, beispielsweise kann es sich um eine Mono-, Bis-, Tris-, Tetra- oder Oligo-piperidinverbindung handeln. Bevorzugt sind Piperidinderivate, die eine Gruppe der Formel I enthalten, worin R Wasserstoff ist, sowie solche, deren Ringstickstoff kein Wasserstoffatom trägt.

Die meisten dieser Piperidin-Lichtschutzmittel tragen polare Substituenten in der 4-Stellung des Piperidinringes oder tragen einen Spiroring in dieser Stellung.

Von Bedeutung sind insbesondere die folgenden Klassen von Piperidinverbindungen.

a) Verbindungen der Formel II

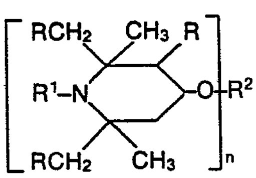
(II) ,

worin n eine Zahl von 1 bis 4, vorzugsweise 1 oder 2 bedeutet, R Wasserstoff oder Methyl bedeutet, $R^1$ Wasserstoff, O, –OH, –O–$C_1$–$C_8$-Alkanoyl, $C_1$–$C_{18}$ Alkyl, –$CH_2CN$, $C_3$–$C_8$ Alkenyl, $C_3$–$C_8$ Alkinyl, $C_7$–$C_{12}$ Aralkyl, $C_1$–$C_8$ Alkanoyl, $C_3$–$C_5$ Alkenoyl, Glycidyl oder eine Gruppe –$CH_2CH(OH)$–Z, worin Z Wasserstoff, Methyl oder Phenyl ist, bedeutet, wobei $R^1$ vorzugsweise $C_1$–$C_{12}$ Alkyl, Allyl, Benzyl, Acetyl oder Acryloyl ist und $R^2$, wenn n 1 ist, Wasserstoff, gegebenenfalls durch ein oder mehrere Sauerstoffatome unterbrochenes $C_1$–$C_{18}$ Alkyl, Cyanethyl, Benzyl, Glycidyl, einen einwertigen Rest einer aliphatischen, cycloaliphatischen, araliphatischen oder aromatischen Carbonsäure, Carbaminsäure oder Phosphor enthaltenden Säure oder einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, oder einer aromatischen Carbonsäure mit 7 bis 15 C-Atomen bedeutet, wenn n 2 ist, $C_1$–$C_{12}$ Alkylen, $C_4$–$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 bis 14 C-Atomen oder einer aliphatischen, cycloaliphatischen oder aromatischen Dicarbaminsäure mit 8 bis 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$–$C_{12}$ Alkyl, so stellen sie z.B. Methyl, Ethyl, n-Propyl, n-Butyl, sek.-Butyl, tert.-Butyl, n-Hexyl, n-Octyl, 2-Äthylhexyl, n-Nonyl, n-Decyl, n-Undecyl oder n-Dodecyl dar.

In der Bedeutung von $C_1$–$C_{18}$ Alkyl können $R^1$ oder $R^2$ z.B. die oben angeführten Gruppen und dazu noch beispielsweise n-Tridecyl, n-Tetradecyl, n-Hexadecyl oder n-Octadecyl darstellen.

Wenn $R^1$ $C_3$–$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R^1$ ist als $C_3$–$C_8$ Alkinyl bevorzugt Propargyl.

Als $C_7$–$C_{12}$ Aralkyl ist $R^1$ insbesondere Phenethyl oder vor allem Benzyl.

$R^1$ ist als $C_1$–$C_8$ Alkanoyl beispielsweise Formyl, Propionyl, Butyryl, Octanoyl, aber bevorzugt Acetyl und als $C_3$–$C_5$ Alkenoyl insbesondere Acryloyl.

Bedeutet $R^2$ einen einwertigen Rest einer Carbonsäure, so stellt es beispielsweise einen Essigsäure-, Stearinsäure-, Salicylsäure-, Methacrylsäure-, Benzoesäure- oder β-(3,5-Di-tert.-butyl-4-hydroxyphenyl)-propionrest dar.

Bedeutet $R^2$ einen zweiwertigen Rest einer Dicarbonsäure, so stellt es beispielsweise einen Adipinsäure-, Suberinsäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R^2$ einen dreiwertigen Rest einer Tricarbonsäure dar, so bedeutet es z.B. einen Trimellithsäure- oder einen Nitrilotriessigsäurerest.

Stellt $R^2$ einen vierwertigen Rest einer Tetracarbonsäure dar, so bedeutet es z.B. den vierwertigen Rest von Butan-1,2,3,4-tetracarbonsäure oder von Pyromellithsäure.

Bedeutet $R^2$ einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für Piperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin

6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-adipat
11) Di-(2,2,6,6-tetramethylpiperidin-4-yl)-sebacat
12) Di-(1,2,3,6-tetramethyl-2,6-diethylpiperidin-4-yl)-sebacat
13) Di-(1-allyl-2,2,6,6-tetramethylpiperidin-4-yl)-phthalat
14) 1-Propargyl-4-β-cyanoethyloxy-2,2,6,6-tetramethylpiperidin
15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)-ester
20) Dibenzyl-malonsäure-di-(1,2,2,6,6-pentamethylpiperidin-4-yl)-ester
21) Dibenzyl-malonsäure-di-(1,2,3,6-tetramethyl-2,6-diethylpiperidin-4-yl)-ester
22) Hexan-1′,6′-bis-(4-carbamoyloxy-1-n-butyl-2,2,6,6-tetramethylpiperidin)
23) Toluol-2′,4′-bis-(4-carbamoyloxy-1-n-propyl-2,2,6,6-tetramethylpiperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperidin-4-yl)-phosphit
27) Tris-(1-propyl-2,2,6,6-tetramethylpiperidin-4-yl)-phosphat
28) Phenyl-[bis-(1,2,2,6,6-pentamethylpiperidin-4-yl)]-phosphonat
29) Di-(1,2,2,6,6-pentamethylpiperidin-4-yl)-sebacat

b) Verbindungen der Formel (III),

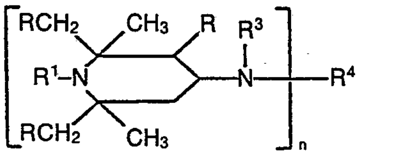

(III)

worin n die Zahl 1 oder 2 bedeutet, R und $R^1$ die unter a) angegebene Bedeutung haben, $R^3$ Wasserstoff, $C_1$–$C_{12}$ Alkyl, $C_2$–$C_5$ Hydroxyalkyl, $C_5$–$C_7$ Cycloalkyl, $C_7$–$C_8$ Aralkyl, $C_2$–$C_{18}$ Alkanoyl, $C_3$–$C_5$ Alkenoyl oder Benzoyl ist und $R^4$ wenn n 1 ist, Wasserstoff, $C_1$–$C_{18}$ Alkyl, $C_3$–$C_8$ Alkenyl, $C_5$–$C_7$ Cycloalkyl, mit einer Hydroxy-, Cyano-, Alkoxycarbonyl- oder Carbamidgruppe substituiertes $C_1$–$C_4$ Alkyl, Glycidyl, eine Gruppe der Formel $-CH_2-CH(OH)-Z$ oder der Formel $-CONH-Z$ ist, worin Z Wasserstoff, Methyl oder Phenyl bedeutet; wenn n 2 ist, $C_2$–$C_{12}$ Alkylen, $C_6$–$C_{12}$ Arylen, Xylylen, eine $-CH_2-CH(OH)-CH_2$-Gruppe oder eine Gruppe $-CH_2-CH(OH)-CH_2-O-D-O-CH_2-CH(OH)-CH_2-$ bedeutet, worin D $C_2$–$C_{10}$ Alkylen, $C_6$–$C_{15}$ Arylen, $C_6$–$C_{12}$ Cycloalkylen ist, oder vorausgesetzt, dass $R^3$ nicht Alkanoyl, Alkenoyl oder Benzoyl bedeutet, $R^4$ auch einen zweiwertigen Rest einer aliphatischen, cycloaliphatischen oder aromatischen Dicarbonsäure oder Dicarbaminsäure oder auch die Gruppe –CO– bedeuten kann, oder $R^3$ und $R^4$ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten $C_1$–$C_{12}$ oder $C_1$–$C_{18}$ Alkyl dar, so haben sie die bereits unter a) angegebene Bedeutung.

Bedeuten etwaige Substituenten $C_5$–$C_7$ Cycloalkyl, so stellen sie insbesondere Cyclohexyl dar.

Als $C_7$–$C_8$ Aralkyl ist $R^3$ insbesondere Phenylethyl oder vor allem Benzyl.

$R^3$ ist als $C_2$–$C_{18}$ Alkanoyl beispielsweise Propionyl, Butyryl, Octanoyl, Dodecanoyl, Hexadecanoyl, Octadecanoyl, aber bevorzugt Acetyl und als $C_3$–$C_5$ Alkenoyl insbesondere Acryloyl.

Bedeutet $R^4$ $C_2$–$C_8$ Alkenyl, dann handelt es sich z.B. um Allyl, Methallyl, 2-Butenyl, 2-Pentenyl, 2-Hexenyl oder 2-Octenyl.

$R^4$ als mit einer Hydroxy-, Cyano-, Alkoxycarbonyl- oder Carbamidgruppe substituiertes $C_2$–$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$–$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$–$C_{15}$ Arylen, so stellen sie z.B. o-, m- oder p-Phenylen, 1,4-Naphthylen oder 4,4′-Diphenylen dar.

Als $C_6$–$C_{12}$ Cycloalkylen ist D insbesondere Cyclohexylen.

Beispiele für Piperidin-Verbindungen dieser Klasse sind folgende Verbindungen:

30) N,N′-Bis-(2,2,6,6-tetramethylpiperidin-4-yl)-hexamethylen-1,6-diamin
31) N,N′-Bis-(2,2,6,6-tetramethylpiperidin-4-yl)-hexamethylen-1,6-diacetamid
32) 1-Acetyl-4-(N-cyclohexylacetamido)-2,2,6,6-tetramethylpiperidin
33) 4-Benzylamino-2,2,6,6-tetramethylpiperidin
34) N,N′-Bis-(2,2,6,6-tetramethylpiperidin-4-yl)-N,N′-dibutyladipamid
35) N,N′-Bis-(2,2,6,6-tetramethylpiperidin-4-yl)-N,N′-dicyclohexyl-2-hydroxypropylen-1,3-diamin
36) N,N′-Bis-(2,2,6,6-tetramethylpiperidin-4-yl)-p-xylylen-diamin
37) Die Verbindung der Formel

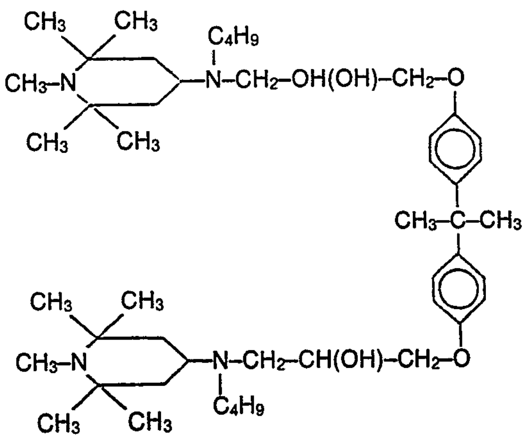

38) 4-(Bis-2-hydroxyäthyl-amino)-1,2,2,6,6-pentamethylpiperidin

39) 4-(3-Methyl-4-hydroxy-5-tert.-butyl-benzoesäureamido)-2,2,6,6-tetramethylpiperidin

40) 4-Methacrylamido-1,2,2,6,6-pentamethylpiperidin

c) Verbindungen der Formel (IV),

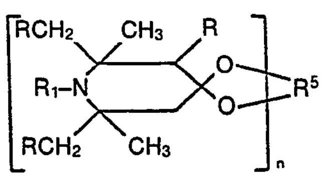

(IV)

worin n die Zahl 1 oder 2 bedeutet, R und $R^1$ die unter a) angegebene Bedeutung haben und $R^5$, wenn n 1 ist, $C_2$–$C_8$ Alkylen oder Hydroxyalkylen oder $C_4$–$C_{22}$ Acyloxyalkylen, und wenn n 2 ist, die Gruppe $(-CH_2)_2C(CH_2-)_2$ bedeutet.

Bedeutet $R^5$ $C_2$–$C_8$ Alkylen oder Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$–$C_{22}$ Acyloxyalkylen bedeutet $R^5$ z.B. 2-Ethyl-2-acetoxymethylpropylen.

Beispiele für Piperidin-Verbindungen dieser Klasse sind folgende Verbindungen:

41) 9-Aza-8,8,10,10-tetramethyl-1,5-dioxaspiro[5.5]undecan

42) 9-Aza-8,8,10,10-tetramethyl-3-ethyl-1,5-dioxaspiro[5.5]undecan

43) 8-Aza-2,7,7,8,9,9-hexamethyl-1,4-dioxaspiro[4.5]decan

44) 9-Aza-3-hydroxymethyl-3-ethyl-8,8,9,10,10-pentamethyl-1,5-dioxaspiro[5.5]undecan

45) 9-Aza-3-ethyl-3-acetoxymethyl-9-acetyl-8,8,10,10-tetramethyl-1,5-dioxaspiro[5.5]undecan

46) 2,2,6,6-Tetramethylpiperidin-4-spiro-2'-(1',3'-dioxan)-5'-spiro-5''-(1'',3''-dioxan)-2''spiro-4'''-(2''',2''',6''',6'''-tetramethylpiperidin).

d) Verbindungen der Formeln VA, VB und VC

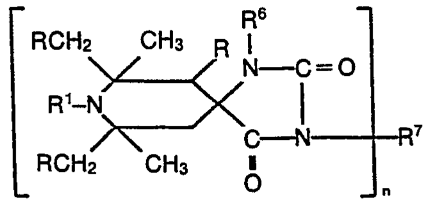

(VA)

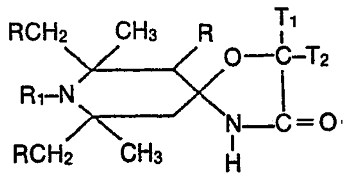

(VB)

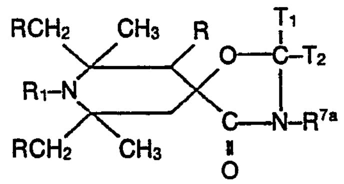

(VC)

worin n die Zahl 1 oder 2 bedeutet, R und $R^1$ die unter a) angegebene Bedeutung haben, $R^6$ Wasserstoff, $C_1$–$C_{12}$ Alkyl, Allyl, Benzyl, Glycidyl oder $C_2$–$C_6$ Alkoxyalkyl ist, $R^7$, wenn n 1 ist, Wasserstoff, $C_1$–$C_{12}$ Alkyl, $C_3$–$C_5$ Alkenyl, $C_7$–$C_9$ Aralkyl, $C_5$–$C_7$ Cycloalkyl, $C_2$–$C_4$ Hydroxyalkyl, $C_2$–$C_6$ Alkoxyalkyl, $C_6$–$C_{10}$ Aryl, Glycidyl oder eine Gruppe der Formel $-(CH_2)_p-COO-Q$ oder der Formel $-(CH_2)_p-O-CO-Q$ ist, worin p 1 oder 2 und Q $C_1$–$C_4$ Alkyl oder Phenyl sind, und wenn n 2 ist, $C_2$–$C_{12}$ Alkylen, $C_6$–$C_{12}$ Arylen, eine Gruppe $-CH_2-CH(OH)-CH_2-O-D-O-CH_2-CH(OH)-CH_2-$, worin D $C_2$–$C_{10}$ Alkylen, $C_6$–$C_{15}$ Arylen, $C_6$–$C_{12}$– Cycloalkylen ist, oder eine Gruppe $-CH_2CH(OZ')CH_2-(OCH_2-CH(OZ')CH_2)_2-$ bedeutet, worin Z' Wasserstoff, $C_1$–$C_{18}$ Alkyl, Allyl, Benzyl, $C_2$–$C_{12}$ Alkanoyl oder Benzoyl ist, $R^{7a}$ Wasserstoff, $C_1$–$C_{12}$ Alkyl, $C_3$–$C_5$ Alkenyl, $C_7$–$C_9$ Aralkyl, $C_5$–$C_7$ Cycloalkyl, $C_2$–$C_4$ Hydroxyalkyl, $C_2$–$C_6$ Alkoxyalkyl, Glycidyl, $C_2$–$C_{12}$ Alkanoyl, $C_7$–$C_{11}$ Aroyl, oder eine Gruppe $-CH_2-COOQ'$, $-CH_2CH_2-COOQ'$ oder $-CH_2CH(CH_3)-COOQ'$ bedeutet, worin Q' $C_1$–$C_{20}$ Alkyl, $C_6$–$C_{14}$ Alkoxyalkyl, $C_5$–$C_7$ Cycloalkyl oder Phenyl ist, und $T_1$ und $T_2$ unabhängig voneinander Wasserstoff, $C_1$–$C_{18}$ Alkyl oder gegebenenfalls durch Halogen oder $C_1$–$C_4$ Alkyl substituiertes $C_6$–$C_{10}$ Aryl oder $C_7$–$C_9$ Aralkyl bedeuten oder $T_1$ und $T_2$ zusammen mit dem sie bindenden C-Atom einen $C_5$–$C_{12}$-Cycloalkanring bilden.

Bedeuten etwaige Substituenten $C_1$–$C_{12}$ Alkyl, so stellen sie z.B. Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Etwaige Substituenten in der Bedeutung von $C_1$–$C_{18}$ Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$–$C_6$ Alkoxyalkyl, so stellen sie z.B. Methoxymethyl, Ethoxymethyl, Propoxymethyl, tert.-Butoxymethyl,

Ethoxyethyl, Ethoxypropyl, n-Butoxyethyl, tert.-Butoxyethyl, Isopropoxyethyl oder Propoxypropyl dar.

Stellt $R^7$ oder $R^{7a}$ Alkenyl dar, so bedeutet es z.B. 1-Propenyl, Allyl, Methallyl, 2-Butenyl oder 2-Pentenyl.

Als $C_7$–$C_9$ Aralkyl sind $R^7$, $R^{7a}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R^7$ oder $R^{7a}$ $C_2$–$C_4$ Hydroxyalkyl, so stellt es z.B. 2-Hydroxyethyl, 2-Hydroxypropyl, 2-Hydroxybutyl oder 4-Hydroxybutyl dar.

Als $C_6$–$C_{10}$ Aryl bedeuten $R^7$, $T_1$ und $T_2$ insbesondere Phenyl, α- oder β-Naphthyl, die gegebenenfalls mit Halogen oder $C_1$–$C_4$ Alkyl substituiert sind.

Stellt $R^7$ $C_2$–$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$–$C_{12}$ Alkenylen bedeutet $R^7$ insbesondere 2-Butenylen, 2-Pentenylen oder 3-Hexenylen.

Bedeutet $R^7$ $C_6$–$C_{12}$ Arylen, so stellt es beispielsweise o-, m- oder p-Phenylen, 1,4-Naphthylen oder 4,4'-Diphenylen dar.

Bedeutet $R^{7a}$ oder Z' $C_2$–$C_{12}$ Alkanoyl, so stellt beispielsweise Propionyl, Butyryl, Octanoyl, Dodecanoyl, aber bevorzugt Acetyl dar. $R^{7a}$ als Aroyl kann insbesondere Benzoyl sein.

D hat als $C_2$–$C_{10}$ Alkylen, $C_6$–$C_{15}$ Arylen oder $C_6$–$C_{12}$ Cycloalkylen die unter b) angegebene Bedeutung.

Beispiele für Piperidin-Verbindungen dieser Klasse sind folgende Verbindungen:

47) 3-Benzyl-1,3,8-triaza-7,7,9,9-tetramethyl-spiro[4.5]decan-2,4-dion
48) 3-n-Octyl-1,3,8-triaza-7,7,9,9-tetramethyl-spiro[4.5]decan-2,4-dion
49) 3-Allyl-1,3,8-triaza-1,7,7,9,9-pentamethyl-spiro[4.5]decan-2,4-dion
50) 3-Glycidyl-1,3,8-triaza-7,7,8,9,9-pentamethylspiro[4.5]decan-2,4-dion
51) 2-iso-Propyl-7,7,9,9-tetramethyl-1-oxa-3,8-diaza-4-oxo-spiro[4.5]decan
52) 2,2-Dibutyl-7,7,9,9-tetramethyl-1-oxa-3,8-diaza-4-oxo-spiro[4.5]decan
53) 2,2,4,4-Tetramethyl-7-oxa-3,20-diaza-21-oxo-dispiro[5.1.11.2]heneicosan
54) 2-Butyl-7,7,9,9-tetramethyl-1-oxa-4,8-diaza-3-oxo-spiro[4,5]decan

oder die Verbindungen der folgenden Formeln:

55) 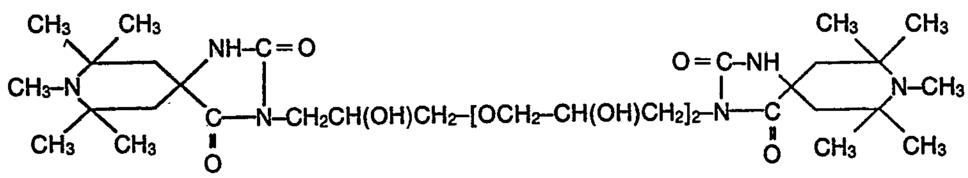

56) 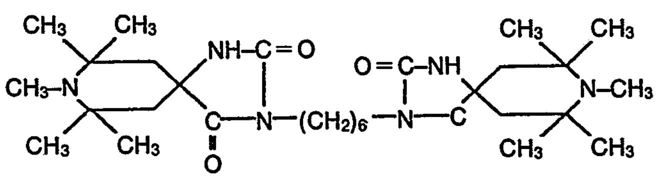

57) 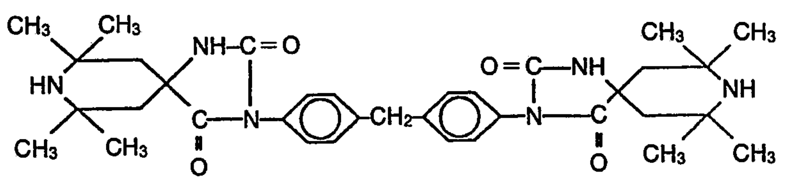

57a) 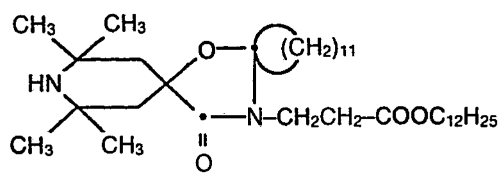

e) Verbindungen der Formel VI

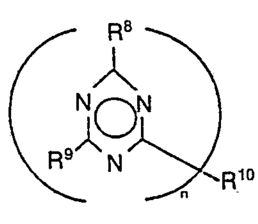

(VI)

worin n die Zahl 1 oder 2 ist und $R_8$ eine Gruppe der Formel

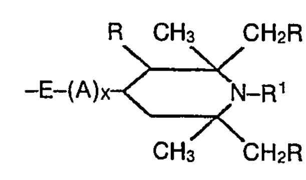

bedeutet, worin R und $R^1$ die unter a) angegebene Bedeutung haben, E –O– oder $-NR^{11}-$ ist, A $C_2$–$C_6$ Alkylen oder $-(CH_2)_3-O-$ und x die Zahlen 0 oder 1 bedeuten, $R^9$ gleich $R^8$ oder eine der Gruppen $-NR^{11}R^{12}$, $-OR^{13}$, $-NHCH_2OR^{13}$ oder $-N(CH_2OR^{13})_2$ ist, $R^{10}$, wenn n = 1 ist, gleich $R^8$ oder $R^9$, und wenn n = 2 ist, eine Gruppe –E–B–E– ist, worin B gegebenenfalls durch $-N(R^{11})-$ unterbrochenes $C_2$–$C_6$ Alkylen bedeutet, $R^{11}$ $C_1$–$C_{12}$ Alkyl, Cyclohexyl, Benzyl oder $C_1$–$C_4$ Hydroxyalkyl oder eine Gruppe der Formel

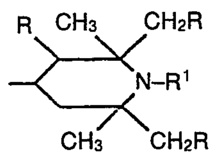

ist, $R^{12}$ $C_1$–$C_{12}$ Alkyl, Cyclohexyl, Benzyl, $C_1$–$C_4$ Hydroxyalkyl und $R^{13}$ Wasserstoff, $C_1$–$C_{12}$ Alkyl oder Phenyl bedeuten oder $R^{11}$ und $R^{12}$ zusammen $C_4$–$C_5$ Alkylen oder Oxaalkylen sind oder auch $R^{11}$ und $R^{12}$ jeweils eine Gruppe der Formel

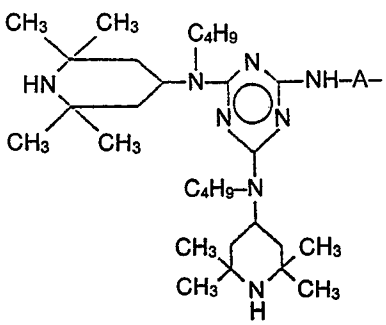

bedeuten.

Bedeuten etwaige Substituenten $C_1$–$C_{12}$ Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$–$C_4$ Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$–$C_6$ Alkylen, so stellt es beispielsweise Ethylen, Propylen, 2,2-Dimethylpropylen, Tetramethylen oder Hexamethylen dar.

Stellen $R^{11}$ und $R^{12}$ zusammen $C_4$–$C_5$ Alkylen oder Oxaalkylen dar, so bedeutet dies z.B. Tetramethylen, Pentamethylen oder 3-Oxa-pentamethylen.

Beispiele für Piperidin-Verbindungen dieser Klasse sind die Verbindungen der folgenden Formeln:

58) 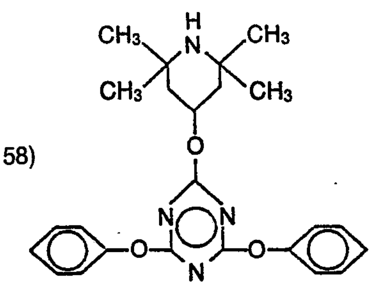

59) 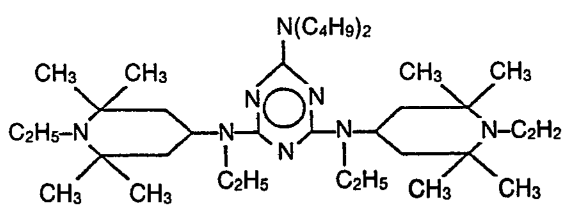

60) 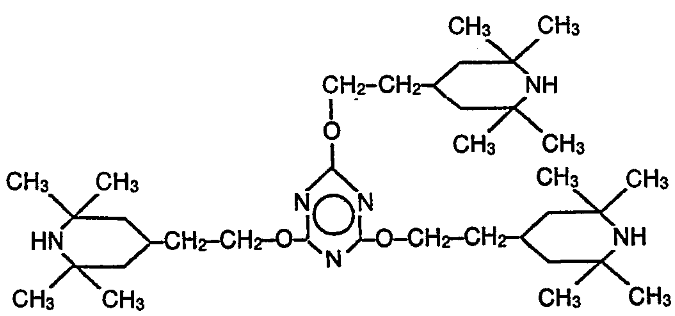

61) 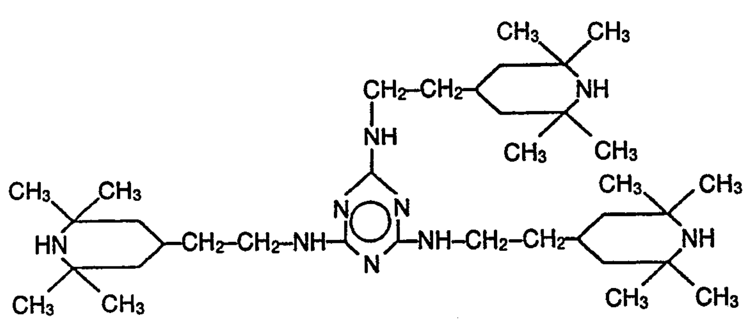

62) 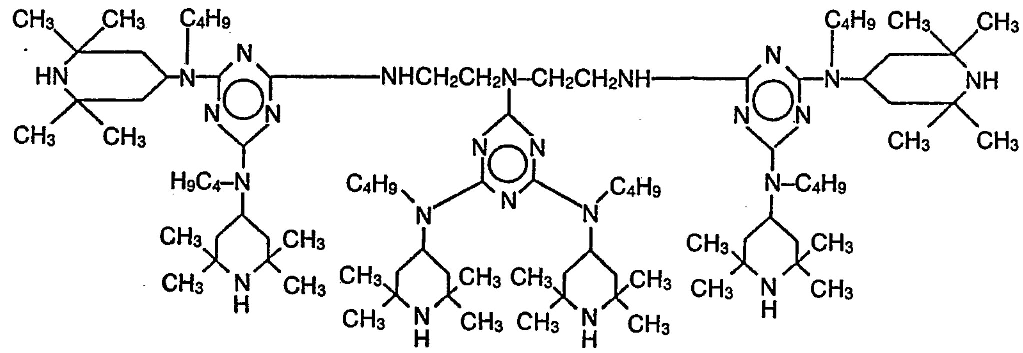

63) 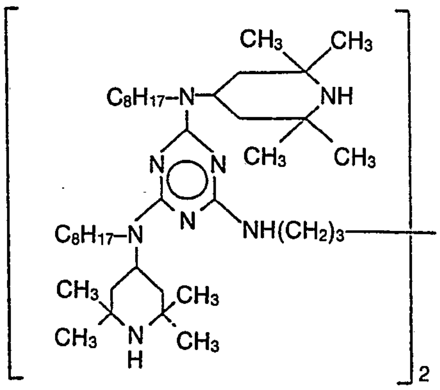

64) 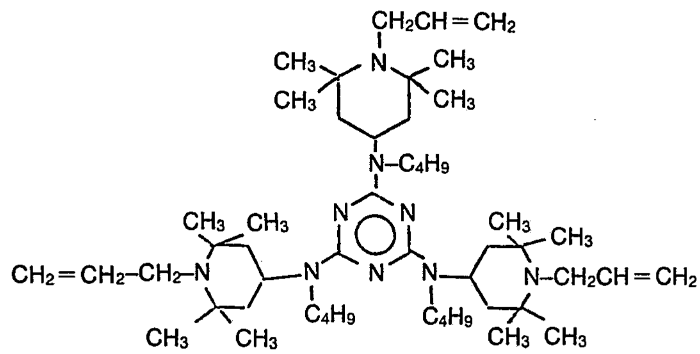

f) Verbindungen der Formel VII,

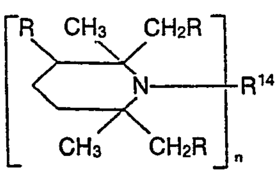 (VII)

worin n die Zahl 1 oder 2 bedeutet, R die für Formel I angegebene Bedeutung hat und $R^{14}$, wenn n 1 ist, $C_4$–$C_{18}$ Alkyl, $C_7$–$C_{12}$ Aralkyl, die Gruppe $-CO-R^{15}$, durch $-CN$, $-COOR^{16}$, $-OH$ oder $-OCOR^{17}$ substituiertes $C_1$–$C_4$ Alkyl oder

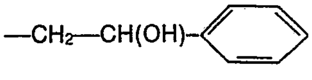

bedeutet, wobei $R^{15}$ $C_1$–$C_{12}$ Alkyl, $C_2$–$C_4$ Alkenyl oder Phenyl, $R^{16}$ $C_1$–$C_{18}$ Alkyl, $R^{17}$ $C_1$–$C_{18}$ Alkyl, $C_2$–$C_{10}$ Alkenyl, Cyclohexyl, Benzyl oder $C_6$–$C_{10}$ Aryl sind, und wenn n 2 ist, $R^{14}$ $C_4$–$C_{12}$ Alkylen, 2-Butenylen-1,4, Xylylen, die Gruppe $-(CH_2)_2-OOC-R^{18}-COO-(CH_2)_2-$ oder die Gruppe $-CH_2-OOC-R^{19}-COO-CH_2-$ ist, wobei $R^{18}$ $C_2$–$C_{10}$ Alkylen, Phenylen oder Cyclohexylen und $R^{19}$ $C_2$–$C_{10}$ Alkylen, Xylylen oder Cyclohexylen bedeuten.

Bedeuten ewaige Substituenten $C_1$–$C_{12}$ Alkyl, so stellen sie z.B. Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Etwaige Substituenten, die $C_1$–$C_{18}$ Alkyl bedeuten, können z.B. die oben angeführten Gruppen und dazu noch beispielsweise n-Tridecyl, n-Tetradecyl, n-Hexadecyl oder n-Octadecyl darstellen.

Stellen etwaige Gruppen $C_2$–$C_{10}$ Alkylen dar, so bedeuten sie beispielsweise Ethylen, Propylen, 2,2-Dimethylpropylen, Tetramethylen, Hexamethylen, Octamethylen oder Decamethylen.

$R^{14}$ bedeutet als $C_4$–$C_{18}$ Alkyl z.B. n-Butyl, sek.-Butyl, tert.-Butyl, n-Hexyl, n-Octyl, 2-Ethyl-hexyl, 1,1-Dimethyl-2-tert.-butylethyl, n-Nonyl, n-Decyl,

n-Dodecyl, n-Tridecyl, n-Tetradecyl, n-Hexadecyl oder n-Octadecyl.

Bedeutet $R^{14}$ ein durch –CN substituiertes $C_1$–$C_4$ Alkyl, so stellt es beispielsweise Cyanomethyl, Cyanoäthyl, 3-Cyano-n-propyl oder 4-Cyano-n-butyl dar.

Bedeutet $R^{14}$ $C_4$–$C_{12}$ Alkylen, so handelt es sich z.B. um 2,2-Dimethylpropylen, Tetramethylen, Hexamethylen, Octamethylen Decamethylen oder Dodecamethylen.

Stellt $R^{14}$ $C_7$–$C_{12}$ Aralkyl dar, so bedeutet es insbesondere Phenethyl, p-Methyl-benzyl oder vor allem Benzyl.

$R^{15}$ bedeutet als $C_2$–$C_4$ Alkenyl beispielsweise Vinyl, 1-Propenyl, Allyl, Methallyl, 2-Butenyl.

$R^{17}$ bedeutet als $C_2$–$C_{10}$ Alkenyl z.B. die für $R^{15}$ in der Bedeutung Alkenyl angeführten Gruppen und dazu noch beispielsweise Crotyl, 2-Hexenyl, 2-Octenyl oder 2-Decenyl. Stellt $R^{17}$ $C_6$–$C_{10}$ Aryl dar, so bedeutet es beispielsweise gegebenenfalls in o- oder p-Stellung mit Methyl, Ethyl, Isopropyl, n-Butyl oder tert.-Butyl substituiertes Phenyl.

Beispiele für Piperidin-Verbindungen dieser Klasse sind folgende Verbindungen:

65) Bis-[β-(2,2,6,6-tetramethylpiperidino)-ethyl]-sebacat

66) α-(2,2,6,6-Tetramethyl-piperidino)-essigsäure-n-octylester

67) 1,4-Bis-(2,2,6,6-tetramethylpiperidino)-2-buten.

g) Verbindungen der Formel VIII

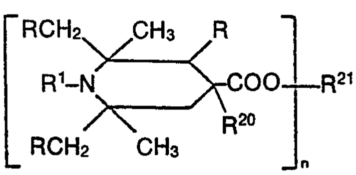 (VIII)

worin n eine Zahl von 1 bis 4, vorzugsweise 1 oder 2 ist, R und $R^1$ die unter a) angegebene Bedeutung haben, $R^{20}$ Wasserstoff, Hydroxyl oder $C_1$–$C_8$ Alkoxy ist und $R^{21}$, wenn n 1 ist, $C_1$–$C_{20}$ Alkyl, $C_3$–$C_{14}$ Alkoxyalkyl, $C_5$–$C_{12}$ Cycloalkyl oder $C_7$–$C_{14}$ Aralkyl bedeutet, wenn n 2 ist, $C_2$–$C_{12}$ Alkylen, durch ein oder zwei –O– unterbrochenes $C_4$–$C_9$ Alkylen, $C_6$–$C_{12}$ Cycloalkylen, $C_8$–$C_{16}$ Cycloalkylen-dialkylen oder $C_8$–$C_{14}$ Aralkylen bedeutet, wenn n 3 ist, $C_3$–$C_{12}$ Alkantriyl bedeutet, und wenn n 4 ist, $C_4$–$C_{12}$ Alkantetrayl bedeutet.

Beispiele für $R^{21}$ als einwertiger Rest sind Ethyl, 2-Ethylbutyl, n-Octyl, n-Dodecyl, n-Octadecyl, 2-Isopropoxyethyl, 2-Dodecyloxyethyl, 2-Butoxypropyl, Cyclohexyl, Cyclooctyl, Benzyl oder 2-Phenylethyl. Beispiele für $R^{21}$ als zweiwertiger Rest sind 1,2-Ethylen, Tetramethylen, Hexamethylen, Octamethylen, Dodecamethylen, 3-Oxa-pentamethylen, 3,6-Dioxa-octamethylen, 1,4-Cyclohexylen, 1,5-Cyclooctylen, 1,4-Cyclohexylen-dimethylen, 1,4-Cyclohexylen-diethylen, m- oder p-Xylylen. Beispiele für $R^{21}$ als dreiwertiger Rest sind Propan-1,2,3-triyl, 1,1,1-Trimethylenethan oder 1,1,1-Trimethylenpropan. Beispiele für $R^{21}$ als vierwertiger Rest sind Butan-1,2,3,4-tetrayl oder Tetramethylenmethan.

h) Polymere Verbindungen, deren wiederkehrende Struktureinheit einen Tetraalkylpiperidinrest der Formel I enthält, insbesondere Polyester, Polyether, Polyamide, Polyamine, Polyurethane, Polyharnstoffe, Polyaminotriazine, Poly(meth)-acrylate, Poly(meth)acrylamide und deren Copolymeren, die solche Reste enthalten.

Beispiele für Piperidin-Verbindungen dieser Klasse sind die Verbindungen der folgenden Formeln, wobei m die Zahlen 2- etwa 200 bedeutet.

68) 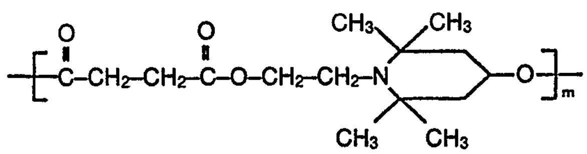

69) 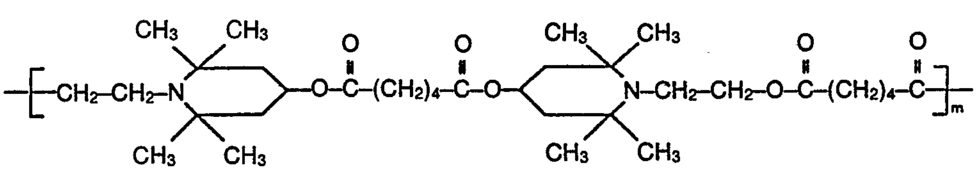

70) 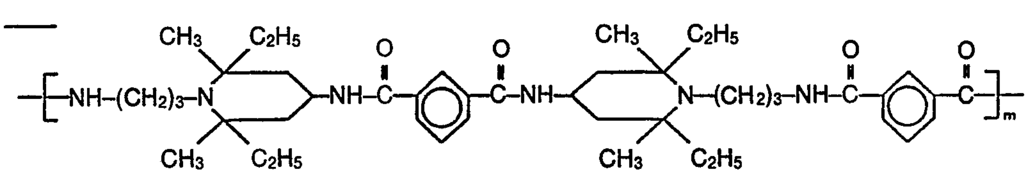

71) 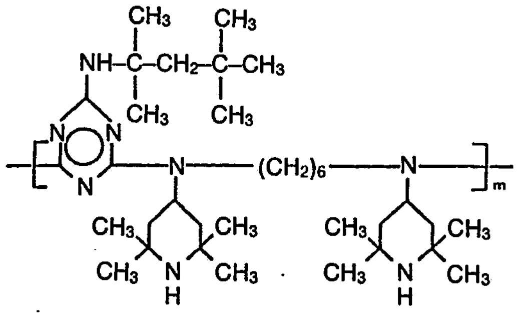

72) 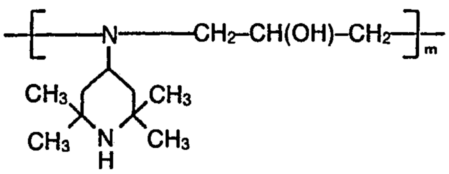

73) 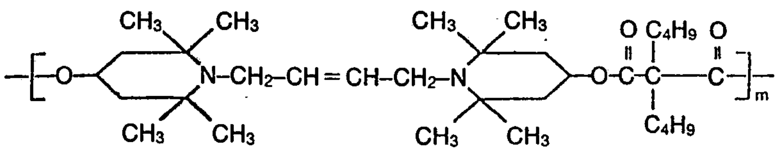

74) 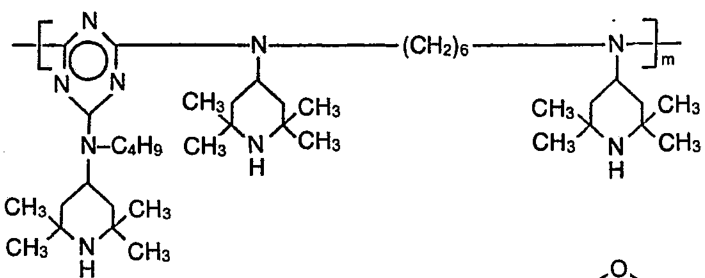

75) 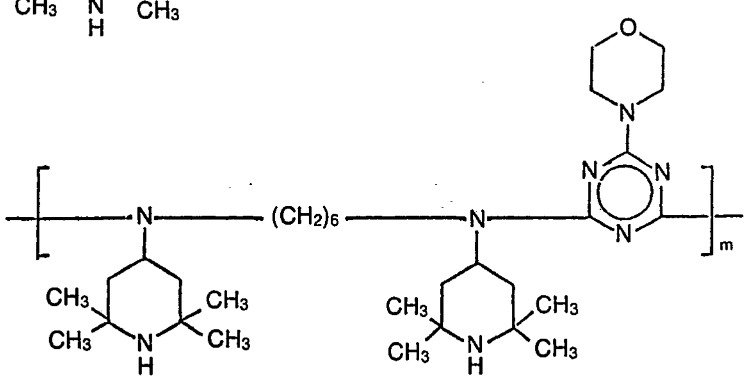

76) 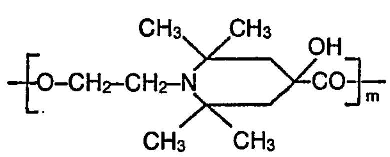

77) 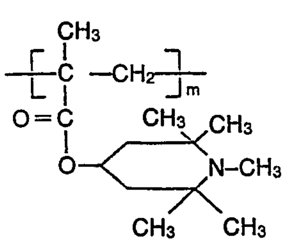

78) 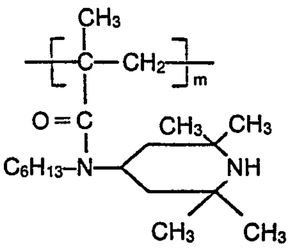

i) Verbindungen, die in ihrem Molekül mindestens eine 2-(2'-Hydroxyphenyl)-benztriazol-Gruppe oder 2-Hydroxybenzophenon-Gruppe und mindestens eine Tetraalkylpiperidingruppe enthalten.

Beispiele für Piperidinverbindungen dieser Klasse sind die Verbindungen der folgenden Formeln:

79) 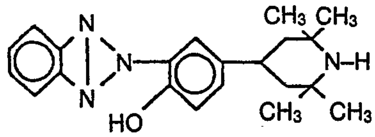

80) 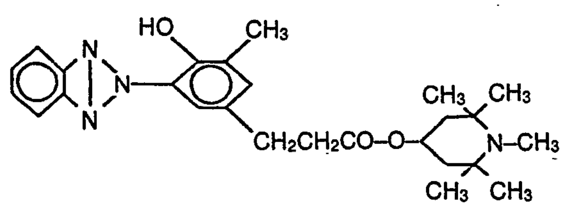

81) 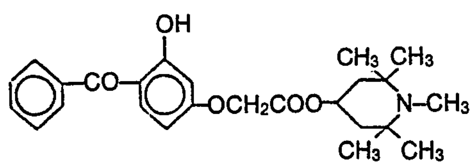

82) 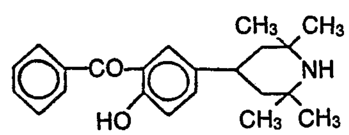

Soweit die Tetraalkylpiperidinverbindungen basische Verbindungen sind, können sie mit Säuren Salze bilden. Hierfür kommen beispielsweise anorganische Säuren oder organische Carbon-, Sulfon-, Phosphon- oder Phosphinsäuren in Frage, wie z.B. Chlorwasserstoffsäure, Borsäure, Phosphorsäure, Essigsäure, Salicylsäure, Toluolsulfonsäure oder Benzolphosphonsäure.

Soweit die Tetraalkylpiperidinverbindungen basische Verbindungen sind, können sie mit Metallchelaten Komplexe bilden, die ebenfalls im Sinne der Erfindung verwendbar sind. Die Metallchelate können beispielsweise solche von Zink, Cadmium, Kobalt, Aluminium oder Chrom sein, besonders bevorzugt sind die des Nickels. Als Chelatbildner sind z.B. 1,3-Dicarbonylverbindungen oder 2-Acylphenole geeignet, wie z.B. Ethylacetoacetat, Acetylaceton, Benzoylaceton, o-Hydroxyacetophenon oder o-Hydroxybenzophenon. Komplexe mit einem Molverhältnis Piperidin : Metallchelat von 1 : 1 und 2 : 1 sind bevorzugt. Auch die polymeren Piperidinderivate der Klasse h) können solche Komplexe mit Metallchelaten bilden, die erfindungsgemäss verwendbar sind.

Für bestimmte Anwendungsgebiete kann es erwünscht sein, dass der Härtungsbeschleuniger mit den ethylenisch ungesättigten Verbindungen copolymerisiert. Hierfür wählt man solche sterisch gehinderten Amine aus, die ethylenisch ungesättigte Gruppen besitzen, wie z.B. Allyl-, Vinyl- oder Maleinatgruppen, insbesondere jedoch Acryl- oder Methacrylgruppen. Beispiele für solche Verbindungen sind die vorhin aufgeführten Verbindungen 2, 7, 9, 17 und 49 sowie die folgenden Verbindungen:

83) 1,2,2,6,6-Pentamethyl-4-acryloyloxy-piperidin
84) 1-Acetyl-2,2,6,6-tetramethyl-4-acryloyloxy-piperidin
85) 1-Benzyl-2,2,6,6-tetramethyl-4-acryloyloxy-piperidin
86) 1,2,2,6,6-Pentamethyl-4-methacrylamido-piperidin

87) 1,2,2,6,6-Pentamethyl-4-(N-butyl)-acrylamido-piperidin.
88) 1,2,2,6,6-Pentamethyl-4-maleinimido-piperidin
89) 1,3,8-Triaza-2,4-dioxo-3-acryloyloxyethyl-7,7,8,9,9-pentamethyl-spiro[4,5]decan
90) 1-[(2-Methacryloyloxy)-ethyl]-2,2,6,6-tetramethyl-piperidin.

Der Vorteil der auf diese Weise copolymerisierten Beschleuniger liegt darin, dass diese nicht durch Migration oder Extraktion aus dem gehärteten Überzug verloren gehen können und dadurch lange Zeit als Lichtstabilisatoren wirken können.

In besonderen Fällen kann es von Vorteil sein, ein Gemisch von sterisch gehinderten Aminen zu verwenden. Die Summe an zugesetztem Härtungsbeschleuniger beträgt 0,1 bis 20 Gew.-%, vorzugsweise 0,5 bis 10 Gew.-%, bezogen auf die Summe der ungesättigten härtbaren Verbindungen.

Der Zusatz der Beschleuniger zu den Überzugsmassen geschieht in einfacher Weise durch Lösen in einer der monomeren Komponenten oder im Gemisch. Diese Lösungen sind stabil, da die Beschleuniger keine Polymerisationsinitiatoren sind. Die Mischungen können aber auch Inhibitoren enthalten wie sie für ethylenisch ungesättigte Verbindungen bekannt sind, z.B. Hydrochinon und dessen Derivate, β-Naphthole, Kupferverbindungen, Phenothiazin- oder Hydroxylaminderivate.

Auf Grund ihrer Lichtschutzwirkung bewirken die erfindungsgemässen Beschleuniger vom Typ der sterisch gehinderten Amine eine Stabilisierung der Überzugsmassen gegen Schädigung durch Licht. Dieser Lichtschutzeffekt lässt sich massgeblich steigern, wenn man zusätzlich den Überzugsmassen ein Lichtschutzmittel aus der Klasse der UV-Absorber zusetzt. Beispiele für bekannte UV-Absorber sind die folgenden Verbindungsklassen:

1. 2-(2′-Hydroxyphenyl)-benztriazole, wie z.B. das 5′-Methyl-, 3′,5′-Di-tert.-butyl-, 5′-tert.-Butyl-, 5′-(1,1,1,3,3-Tetramethyl-butyl)-, 5-Chlor-3′,5′-di-tert.-butyl-, 5-Chlor-3′-tert.-butyl-5′-methyl-, 3′-sec.-Butyl-5′-tert.-butyl-, 3′-α-Methylbenzyl-5′-methyl-, 3′-α-Methylbenzyl-5′-methyl-5-chlor-, 4′-Hydroxy-, 4′-Methoxy-, 4′-Octyloxy-, 3′,5′-Di-tert.-amyl-, 3′-Methyl-5′-carbomethoxy-ethyl-, 3′,5′-Bis(α,α-dimethylbenzyl)-, 3′,5′-Bis(α,α-dimethylbenzyl)-5-chlor-, 3′,5′-Di-tert.-octyl-, 3′,5′-Di-tert.-octyl-5-chlor- oder das 5-Chlor-3′,5′-di-tert.-amyl-Derivat. Auch die im US-Patent 3 642 813 beschriebenen 1,2,3-Triazole können verwendet werden.

2. 2,4-Bis-(2′-hydroxyphenyl)-6-alkyl-s-triazine, wie z.B. das 6-Ethyl-, 6-Heptadecyl- oder 6-Undecyl-Derivat.

3. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy- oder 2′-Hydroxy-4,4′-dimethoxy-Derivat.

4. 1,3-(2′-Hydroxybenzoyl)-benzole, z.B. 1,3-Bis(2′-hydroxy-4′-hexyloxy-benzoyl)-benzol, 1,3-Bis-(2′-hydroxy-4′-octyloxy-benzoyl)-benzol oder 1,3-Bis-(2′-hydroxy-4′-dodecyloxy-benzoyl)-benzol.

5. Ester von gegebenenfalls substituierten Benzoesäuren, wie z.B. 4-tert.-Butyl-phenylsalicylat, Phenylsalicylat, Octylphenylsalicylat, Dibenzoylresorcin, Bis(4-tert.-butylbenzoyl)-resorcin, Benzoyl-resorcin, 3,5-Di-tert.-butyl-4-hydroxybenzoesäure-2,4-di-tert.-butylphenylester.

6. Acrylate, wie z.B. α-Cyan-β,β-diphenylacrylsäure-ethylester bzw. -isooctylester, α-Carbomethoxy-zimtsäuremethylester, α-Cyano-β-methoxy-p-methoxy-zimtsäure-methylester, N-(β-Carbomethoxy-β-cyanovinyl)-2-methyl-indolin.

7. Oxalsäurediamide, wie z.B. 4,4′-Di-octyloxyoxanilid, 2,2′-Di-octyloxy-5,5′-di-tert.-butyl-oxanilid, 2,2′-Di-dodecyloxy-5,5′-di-tert.-butyl-oxanilid, 2-Ethoxy-2′-ethyl-oxanilid, N,N′-Bis-(3-di-methylaminopropyl)-oxalamid, 2-Ethoxy-5-tert.-butyl-2′-ethyl-oxanilid, 2-Ethoxy-2′-ethyl-5,4′-di-tert.-butyloxanilid, Gemische von ortho- und para-Methoxy- sowie von o- und p-Ethoxy-disubstituierten Oxaniliden.

Unter den erfindungsgemäss verwendeten UV-Absorbern werden diejenigen der Klassen 1, 3 und 7, insbesondere aber diejenigen der Klasse 1 (Benztriazole) bevorzugt. Solche Benztriazole sind z.B. in den US-Patentschriften 3 004 896, 3 189 615, 3 320 194, 4 127 586 und 4 283 327 beschrieben. Die UV-Absorber werden in einer Menge von 0,1 bis 5 Gew.-%, vorzugsweise 0,5 bis 2 Gew.-%, bezogen auf die Summe der strahlenhärtbaren Verbindungen zugesetzt.

In einer bevorzugten Ausführungsweise der Erfindung wird den strahlenhärtbaren Gemischen eine organische Verbindung des dreiwertigen Phosphors zugesetzt. Beispiele hierfür sind Phosphite, Phosphonite oder Phosphine. Solche Verbindungen sind als Costabilisatoren für Polymere bekannt. Beispiele für Phosphite sind Trialkyl-, Triaryl- oder alkylierte Triarylphosphite sowie gemischte Phosphite, wie Trilauryl-, Triphenyl-, Phenyl-di(decyl)-, Tris(nonylphenyl)- oder Tris(2,4-di-tert.-butyl-phenyl)-phosphite oder Pentaerythrit-bis-(octadecylphosphit). Beispiele für Phosphonite sind der Tetra-(2,4-di-tert.-butylphenyl)-ester der Diphenyl-4,4′-diphosphonigsäure oder der Di(2,4-di-tert.-butylphenyl)-ester der Phenylphosphonigsäure. Beispiele für Phosphine sind insbesondere tertiäre Phosphine wie z.B. Triphenylphosphin, Tritolylphosphin oder Trilaurylphosphin. Bevorzugt setzt man Phosphite ein.

Diese Phosphorverbindungen bewirken eine Stabilisierung des gehärteten Überzugs gegen Verfärbung, insbesondere bei Anwesenheit von UV-Absorbern, und gegen thermisch-oxidative Alterung. Die Menge der zugesetzten Phosphorverbindungen beträgt im allgemeinen 0,1 bis 5 Gew.-%, bezogen auf die Summe der strahlenhärtbaren Verbindungen.

Die strahlenhärtbaren Gemische können weitere Stabilisatoren enthalten, wie sie in der Technologie von Überzügen üblich sind. Beispiele hierfür sind Antioxydantien oder Metalldesaktivatoren.

Die strahlenhärtbaren Überzüge können auf den verschiedensten Substraten appliziert werden, beispielsweise auf Holz, Metall, Kunststoff, Papier, Glas oder keramischen Massen. Das Auftragen kann kontinuierlich oder diskontinuierlich geschehen nach den üblichen Methoden der Technik, wie z.B. durch Streichen, Sprühen, Tauchen oder durch elektrostatische Prozesse. Auch eine Aufbringung in mehreren Schichten ist möglich.

Die Härtung geschieht durch Bestrahlung mit Elektronenstrahlen wozu die üblichen Apparaturen zur Strahlenhärtung von Überzügen geeignet sind. Diese arbeiten vorwiegend im kontinuierlichen Verfahren wobei der zu überziehende Gegenstand durch eine Bestrahlungskammer transportiert wird. Bei Spannungen von 100 bis 400 KV und etwa 10 bis 100 mA erfolgt die Härtung der Überzüge in weniger als einer Sekunde. Vorzugsweise geschieht die Bestrahlung in einer Inertgas-Atmosphäre.

Eine Variante des erfindungsgemässen Härtungsverfahrens besteht darin, dass man die Überzugsmasse zuerst durch Elektronenbestrahlung vorhärtet und anschliessend durch Bestrahlung mit UV-Licht nachhärtet. In diesem Fall setzt man der zu härtenden Masse vorteilhafterweise einen Photoinitiator zu, wie sie für die UV-Härtung ethylenisch ungesättigter Systeme bekannt sind. Beispiele hierfür sind Benzophenon und dessen Derivate, Acetophenon-Derivate und andere aromatisch-aliphatische Ketone, Benzoin und Benzoinether, Benzil und Benzilketale oder Acylphosphinoxide.

Ein solches Zweistufen-Verfahren kann in speziellen Fällen von Vorteil sein, beispielsweise, wenn eine besonders rasche Härtung an der Oberfläche wichtig ist oder wenn die Elektronenbestrahlung nicht unter Inertgas durchgeführt wird.

Die Anwendungsgebiete der Elektronenstrahlhärtung sind vielfältig, beispielsweise die Lackierung von Möbeln, von Fahrzeugteilen oder von Maschinenteilen, die Bandbeschichtung (Coil Coating) die Lackierung von Verpackungsmaterial, insbesondere von Folien, die Drahtlackierung, das Aufbringen von Isolierschichten für gedruckte Schaltungen oder andere elektronische Bauteile oder das Aufbringen von Klebstoffen auf Folien oder andere Substrate.

Die folgenden Beispiele erläutern die Erfindung näher. Darin bedeuten Teile Gewichtsteile und % Gewichtsprozente.

Beispiel 1:

Eine Mischung von

85 Teilen Ebecryl® 584 (Lösung eines Polyesteracrylates in Hexandioldiacrylat, Hersteller: UCB, Belgien)

15 Teilen Verdünner QM 672 (Dicyclopentadienyloxyethylacrylat, Hersteller: Rohm & Haas Co., USA)

6,3 Teilen Byk 300 (Verlaufshilfsmittel auf Basis eines Polysiloxanes, Hersteller: Byk-Mallinckrodt, BRD) und

1 Teil des in Tabelle 1 aufgeführten Härtungsbeschleunigers wird in einem Schnellrührer homogenisiert.

Die klare Mischung wird mit einer Aufziehspirale in einer Schichtdicke von 40 um auf Stahlbleche aufgebracht, die vorher mit einem Primer und einem Metalleffektlack beschichtet wurden.

Diese Proben werden in einem Electrocurtain-Gerät der Fa. Charmilles, Genf, einer Elektronenstrahl-Härtung in einer Inertgasatmosphäre ($N_2$) unterzogen. Die Strahlendosis beträgt 6 Megarad. 24 Stunden nach der Bestrahlung wird die Pendelhärte nach Koenig (DIN 53 157) gemessen, die ein Kriterium für den erzielten Härtungsgrad ist.

Tabelle 1

| Zugesetzter Härtungsbeschleuniger (1% bezogen auf Lackharz) | Pendelhärte (sec) |
|---|---|
| Keiner | 129 |
| Di(1,2,2,6,6-pentamethylpiperidin-4-yl)-sebacat | 152 |
| Di(1-allyl-2,2,6,6-tetramethylpiperidin-4-yl)-sebacat | 150 |
| 2,4,6-Tris(N-butyl-1-allyl-2,2,6,6 tetramethylpiperidin-4-yl-amino)-1,3,5-triazin (Verbindung Nr. 64). | 151 |

Man ersieht daraus, dass die sterisch gehinderten Piperidin-Lichtschutzmittel die Härtung beschleunigen.

Beispiel 2

Es wird wie in Beispiel 1 verfahren. Als erfindungsgemässe Additive werden die folgenden Verbindungen verwendet:

B I: Di(1,2,2,6,6-pentamethylpiperidin-4-yl)-sebacat

B II: 1,2,2,6,6-pentamethylpiperidin-4-yl-acrylat

UV I: UV-Absorber der Formel

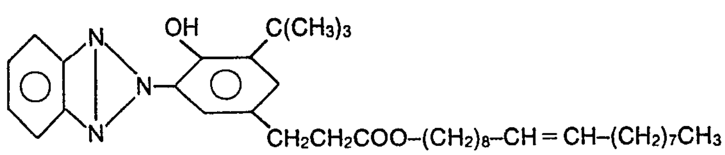

PI: Trilaurylphosphit

Die Proben werden wie in Beispiel 1 beschrieben bei einer Strahlungsdosis von 6 Megarad elektronenstrahlgehärtet. Von den gehärteten Proben wird die Pendelhärte nach Koenig bestimmt. Ferner werden die gehärteten Proben einer 300-stündigen Schnellbewitterung im QUV-Gerät unterworfen und anschliessend die Glanzerhaltung und Rissbildung bestimmt. Die Ergebnisse sind in Tabelle 2 aufgeführt.

Tabelle 2

| Beschleuniger | UV-Absorber | Phosphorverbindung | Pendelhärte (sec) | Glanzerhaltung (%) | Rissbildung |
|---|---|---|---|---|---|
| – | – | – | 129 | 26 | stark |
| 1,0% B I | – | – | 152 | 25 | stark |
| – | 1,5% UV I | – | 88 | 72 | keine |
| – | – | 0,5% P I | 105 | 20 | stark |
| 1,0% B I | 1,5% UV I | – | 120 | 80 | keine |
| – | 1,5% UV I | 0,5% P I | 40 | 75 | keine |
| 1,0% B I | 1,5% UV I | 0,5% P I | 120 | 78 | keine |
| 1,0% B II | 1,5% UV I | – | 141 | 75 | keine |

Man ersieht daraus, dass sowohl der UV-Absorber als auch die Phosphorverbindung die Härtung verzögern, während die Piperidin-Lichtschutzmittel die Härtung beschleunigen. Andererseits bewirkt der UV-Absorber eine wesentliche Verbesserung der Witterungsstabilität. Kombiniert man alle drei Komponenten, so erreicht man die beste Wetterbeständigkeit ohne eine Härtungsverzögerung in Kauf nehmen zu müssen.

Beispiel 3

Dieses Beispiel zeigt die beschleunigende Wirkung eines gehinderten Amines in Anwesenheit verschiedener UV-Absorber. Verwendet wurde ein Gemisch der folgenden Zusammensetzung:

39,7 Teile eines Polyesteracrylates (Ebecryl® 810, Fa. UCB)
29 Teile eines Polyurethanacrylates (Actylan® AJ 20, SNPE, Frankreich)
15 Teile Hexandioldiacrylat
9 Teile Dicyclopentenyloxyäthyl-acrylat (QM 672, Fa. Rohm + Haas, USA)
4,5 Teile Trimethylolpropantriacrylat
2,5 Teile 2-Ethylhexylacrylat
0,3 Teile eines Verlaufshilfsmittel (Byk® 300, Fa. Byk-Mallinckrodt, BRD).

Die folgenden Additive wurden dieser Mischung in der Tabelle 3 angegebenen Menge zugesetzt:

B I: Di-(1,2,2,6,6-pentamethylpiperidin-4-yl)-sebacat
UV II: 2-[2-Hydroxy-3,5-di(tert.amyl)-phenyl]-benztriazol
UV III: 2-Ethoxy-4'-dodecyl-oxaldianilid
UV IV: 2-Hydroxy-4-(2-acryloyloxyethoxy)-benzophenon
P II: Tris(2,4-di-tert.butyl-phenyl)-phosphit.

Die Proben werden wie in Beispiel 1 beschrieben bereitet und mit einer Strahlendosis von 5 Megarad bestrahlt. In Tabelle 3 sind die dabei erzielten Pendelhärten des Lackfilmes (DIN 53 157) aufgeführt:

Tabelle 3

| UV-Absorber | Phosphit | Beschleuniger | Pendelhärte (sec.) |
|---|---|---|---|
| 3% UV II | – | – | 45 |
| 2% UV II | – | 1% B I | 53 |
| 3% UV II | 0,5% P II | – | 39 |
| 2% UV II | 0,5% P II | 1% B I | 56 |
| 3% UV III | – | – | 52 |
| 2% UV III | – | 1% B I | 70 |
| 3% UV IV | – | – | 56 |
| 2% UV IV | – | 1% B I | 69 |

Beispiel 4

Es wird wie in Beispiel 1 verfahren, jedoch wird ein Gemisch der folgenden Zusammensetzung verwendet:

75,2 Teile eines Polyetheracrylates (Plex® 6631, Fa. Röhm GmbH, BRD)
24,0 Teile Hexandioldiacrylat
0,5 Teile eines Verlaufshilfsmittel auf Silikonbasis (Byk® 300, Fa. Byk-Mallinckrodt, BRD)
0,3 Teile eines Verlaufshilfsmittels auf Silikonbasis (Blisterfree®, Fa. B. Schwegmann, BRD)

Als Härtungsbeschleuniger wird Di-1,2,2,6,6-pentamethylpiperidin-4-yl-sebacat (= B I) in Mengen von 1% und 2%, bezogen auf den Lack der obigen Zusammensetzung, verwendet. Die Proben werden mit einer Strahlendosis von 4 und 5 Megarad bestrahlt. Die Ergebnisse sind in Tabelle 4 aufgeführt.

Tabelle 4

| Härtungsbeschleuniger | Pendelhärte nach DIN 53 157 (sec.) Strahlendosis 4 Mrad | 5 Mrad |
|---|---|---|
| keiner | 60 | 88 |
| 1% B I | 92 | 103 |
| 3% B I | 100 | 128 |

Beispiel 5

Es wird wie in Beispiel 4 verfahren, jedoch wird ein Gemisch der folgenden Zusammensetzung verwendet:

67,2 Teile eines Polyetheracrylates (Plex® 6673, Fa. Röhm GmbH)
32,0 Teile Hexandioldiacrylat
0,5 Teile eines Verlaufshilfsmittels auf Silikon-Basis (Byk® 300, Fa. Byk-Mallinckrodt, BRD)
0,3 Teile eines Verlaufshilfsmittels (Blisterfree®, Fa. B. Schwegmann, BRD).

Tabelle 5

| Beschleuniger | Pendelhärte (sec.) bei Strahlendosis von 10 Mrad | 20 Mrad |
|---|---|---|
| keiner | 39 | 73 |
| 1% B I | 66 | 112 |
| 3% B I | 102 | 127 |

Beispiel 6

Es wird wie in Beispiel 4 verfahren unter Verwendung des folgenden Gemisches:

65,2 Teile eines Epoxidacrylates (Setalux® UV 2280, Fa. Synthese B.V., Holland)
34,0 Teile Hexandioldiacrylat
0,5 Teile Verlaufshilfsmittel Byk® 300
0,3 Teile Verlaufshilfsmittel Blisterfree®

Tabelle 6

| Beschleuniger | Pendelhärte (sec.) bei Strahlendosis von 1 Mrad | 1,5 Mrad |
|---|---|---|
| keiner | 65 | 81 |
| 1% B I | 83 | 83 |
| 3% B I | 87 | 106 |

Beispiel 7

Es wird wie in Beispiel 4 verfahren unter Verwendung des folgenden Gemisches:

39,2 Teile eines Polyacrylat-harzes (Ebecryl® 754, Fa. UCB, Belgien)
56,0 Teile Hexandioldiacrylat
0,5 Teile Verlaufshilfsmittel Byk® 300
0,3 Teile Verlaufshilfsmittel Bisterfree®

Tabelle 7

| Beschleuniger | Pendelhärte (sec.) bei Strahlendosis von 5 Mrad | 7,5 Mrad |
|---|---|---|
| keiner | 57 | 72 |
| 1% B I | 60 | 76 |
| 3% B I | 84 | 83 |

Beispiel 8

Es wird wie in Beispiel 4 verfahren unter Verwendung des folgenden Gemisches:

49,2 Teile eines Polyurethanacrylates (Actylan® AJ, 18, Fa. SNPE, Frankreich)
40,0 Teile Hexandioldiacrylat
10,0 Teile N-Vinylpyrrolidon
0,5 Teile Verlaufshilfsmittel Byk® 300
0,3 Teile Verlaufshilfsmittel Blisterfree®

Tabelle 8

| Beschleuniger | Pendelhärte (sec.) bei Strahlendosis von 0,75 Mrad | 1 Mrad |
|---|---|---|
| keiner | 65 | 85 |
| 1% B I | 90 | 92 |
| 3% B I | 98 | 108 |

**Patentansprüche**

1. Verfahren zum Härten von Überzugsmassen, welche ethylenisch ungesättigte Verbindungen enthalten, durch Bestrahlung mit Elektronenstrahlen unter Zusatz eines Härtungsbeschleunigers, dadurch gekennzeichnet, dass man als Härtungsbeschleuniger ein 2,2,6,6-Tetraalkylpiperidinderivat verwendet, das in seinem Molekül mindestens eine Gruppe der Formel I enthält,

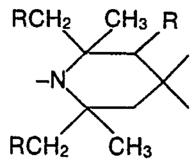

(I) ,

worin R Wasserstoff oder Methyl ist.

2. Verfahren gemäss Anspruch 1, dadurch gekennzeichnet, dass man als Härtungsbeschleuniger ein Piperidinderivat verwendet, das in seinem Molekül mindestens eine Gruppe der Formel I enthält, worin R Wasserstoff ist und der Ringstickstoff keinen Wasserstoff trägt.

3. Verfahren gemäss Anspruch 1, dadurch gekennzeichnet, dass die härtbare Überzugsmasse ein Lichtschutzmittel aus der Klasse der UV-Absorber, vorzugsweise ein solches aus der Klasse der 2-(2′-Hydroxyphenyl)-benztriazole, enthält.

4. Verfahren gemäss Anspruch 1, dadurch gekennzeichnet, dass die härtbare Überzugsmasse eine organische Verbindung des dreiwertigen Phosphors, vorzugsweise ein organisches Phosphit, enthält.

5. Verfahren gemäss Anspruch 1, dadurch gekennzeichnet, das die härtbare Überzugsmasse ein Automobillack oder ein Lack für Coil-Coating Beschichtungen oder ein Folienlack oder ein Drahtlack ist.

6. Verfahren gemäss Anspruch 1, dadurch gekennzeichnet, dass die Überzugsmasse Bestandteil eines Mehrschichtlacks ist.

7. Verfahren gemäss Anspruch 1, dadurch gekennzeichnet, dass dem Verfahren eine Bestrahlung mit UV-Licht nachgeschaltet wird und der Überzugsmasse ein Photoinitiator zugegeben wird.

8. Durch Elektronenstrahlen härtbare Überzugsmasse, enthaltend eine oder mehrere ethylenisch ungesättigte Verbindungen und einen Härtungsbeschleuniger sowie gegebenenfalls Stabilisatoren, Pigmente, Füllstoffe oder sonstige für Überzugsmassen übliche Zusatzstoffe, dadurch gekennzeichnet, dass der Härtungsbeschleuniger ein 2,2,6,6-Tetraalkylpiperidinderivat ist, das in seinem Molekül mindestens eine Gruppe der Formel I enthält,

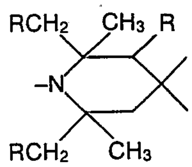

(I) ,

worin R Wasserstoff oder Methyl ist.

9. Überzugsmasse gemäss Anspruch 8, enthaltend auf 100 Gew.-Teile ethylenisch ungesättigter Verbindungen 0,1 bis 10 Gew.-%, vorzugsweise 0,5 bis 3 Gew.-% an Härtungsbeschleuniger.

**Claims**

1. A process for curing coating compositions, which contain ethylenically unsaturated compounds, by electron beam irradiation with the addition of a curing accelerator, which comprises using as the curing accelerator a 2,2,6,6-tetraalkylpiperidine derivative which, in its molecule, contains at least one group of the formula I

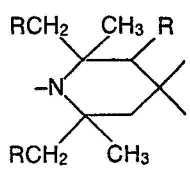

(I) ,

in which R is hydrogen or methyl.

2. A process according to Claim 1, wherein the curing accelerator used is a piperidine derivative which, in its molecule, contains at least one group of the formula I, in which R is hydrogen and there is no hydrogen on the ring nitrogen.

3. A process according to Claim 1, wherein the curable coating composition contains a light stabiliser from the class of UV absorbers, preferably a light stabiliser from the class of 2-(2'-hydroxyphenyl)-benzotriazoles.

4. A process according to Claim 1, wherein the curable coating composition contains an organic compound of trivalent phosphorus, preferably an organic phosphite.

5. A process according to Claim 1, wherein the curable coating composition is an automotive finish or a coil coating finish or a film finish or a wire enamel.

6. A process according to Claim 1, wherein the coating composition is a constituent of a multi-coat finish.

7. A process according to Claim 1, which is followed by an irradiation with UV light and wherein a photoinitiator is added to the coating composition.

8. A coating composition which is curable by electron beams and contains one or more ethylenically unsaturated compounds and a curing accelerator and also, if appropriate, stabilisers, pigments, fillers or other conventional additives for coating compositions, wherein the curing accelerator is a 2,2,6,6-tetraalkylpiperidine derivative, which in its molecule, contains at least one group of the formula I

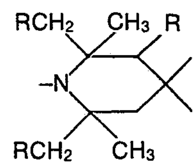

(I) ,

in which R is hydrogen or methyl.

9. A coating composition according to Claim 8, which contains 0.1 to 10% by weight, preferably 0.5 to 3% by weight, of curing accelerator per 100 parts by weight of ethylenically unsaturated compounds.

**Revendications**

1. Procédé pour durcir des matières de revêtement contenant des composés à insaturation éthylénique, par irradiation avec des faisceaux électroniques en présence d'un accélérateur de durcissement, procédé caractérisé en ce qu'on utilise, comme accélérateur de durcissement, un composé tétraalkyl-2,2,6,6 pipéridinique dont la molécule contient au moins un radical répondant à la formule I:

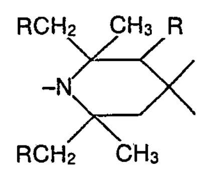

(I) ,

dans laquelle R représente l'hydrogène ou un radical méthyle.

2. Procédé selon la revendication 1 caractérisé en ce qu'on utilise, comme accélérateur de durcissement, un composé pipéridinique dont la molécule contient au moins un radical de formule I dans lequel R représente l'hydrogène et l'azote du cycle ne porte pas d'hydrogène.

3. Procédé selon la revendication 1 caractérisé en ce que la matière de revêtement durcissable contient un stabilisant à la lumière de la catégorie des absorbeurs de rayons ultra-violets, de préférence de la catégorie des (hydroxy-2 phényl)-2 benzotriazoles.

4. Procédé selon la revendication 1 caractérisé en ce que la matière de revêtement durcissable contient un composé organique du phosphore trivalent, de préférence un phosphite organique.

5. Procédé selon la revendication 1 caractérisé en ce que la matière de revêtement durcissable est une peinture pour automobiles ou une peinture pour revêtements sur bandes («coil coating») ou une peinture pour feuilles ou une peinture pour fils métalliques.

6. Procédé selon la revendication 1 caractérisé en ce que la matière de revêtement est l'un des constituants d'une peinture à plusieurs couches.

7. Procédé selon la revendication 1 caractérisé en ce qu'après avoir exécuté le procédé on effectue une irradiation par un rayonnement ultraviolet et en ce que la matière de revêtement est additionnée d'un photo-amorceur.

8. Matière de revêtement durcissable par des faisceaux électroniques, contenant un ou plusieurs composés à insaturation éthylénique et un accélérateur de durcissement ainsi que, le cas échéant, des stabilisants, des pigments, des charges ou d'autres additifs usuels pour matières de revêtement, matière caractérisée en ce que l'accélérateur de durcissement est un composé tétraalkyl-2,2,6,6 pipéridinique dont la molécule contient au moins un radical répondant à la formule I:

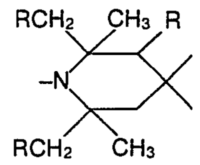

(I) ,

dans laquelle R représente l'hydrogène ou un radical méthyle.

9. Matière de revêtement selon la revendication 8 qui contient, pour 100 parties en poids de composés à insaturation éthylénique, de 0,1 à 10% en poids, de préférence de 0,5 à 3% en poids, de l'accélérateur de durcissement.